# NEUE EUROPÄISCHE PATENTSCHRIFT

(11) **EP 2 846 209 B2**
(45) Veröffentlichungstag und Bekanntmachung des Hinweises auf die Entscheidung über den Einspruch: **19.04.2023**
(45) Hinweis auf die Patenterteilung: 09.09.2020
(21) Anmeldenummer: 14177076.8
(22) Anmeldetag: 15.07.2014
(51) Int. Cl.: A01B 69/00, G05D 1/00

(54) **Verfahren zum externen Steuern eines landwirtschaftlichen Nutzfahrzeuges**
Method for externally controlling an agricultural commercial vehicle
Procédé de commande externe d'un véhicule utilitaire agricole

(30) Priorität: 04.09.2013 DE 102013109622
(43) Veröffentlichungstag der Anmeldung: 11.03.2015
(73) Patentinhaber: CLAAS Tractor S.A.S., 78141 Vélizy-Villacoublay Cedex (FR)
(72) Erfinder: Athanassiadis, Amelie, 78180 Montigny Le Bretonneux (FR); Poirier, Jean-Paul, 92290 Chatenay-Malbry (FR)
(74) Vertreter: CLAAS Gruppe

(56) Entgegenhaltungen:
- DE-A1- 10 203 653
- DE-A1- 10 217 398
- JP-A- 2011 155 938
- US-A1- 2010 134 488
- US-B1- 6 285 925

## Beschreibung

Die Erfindung betrifft ein Verfahren zum externen Steuern eines landwirtschaftlichen Nutzfahrzeuges über eine Fernbedienung, wobei eine relative Position der Fernbedienung zum Nutzfahrzeug erfasst wird.

Landwirtschaftliche Nutzfahrzeuge verfügen üblicherweise über einen front- und/oder heckseitigen Dreipunkt-Kraftheber, an welchem Arbeitsgeräte aufgenommen und über diesen angehoben werden können. Allerdings ist zum Ankoppeln des jeweiligen Anbaugeräts im Vorfeld eine präzise Positionierung des Nutzfahrzeuges zum Arbeitsgerät notwendig, bei welcher zum Teil auf die Hilfe einer weiteren Person zurückgegriffen werden muss, um den Fahrzeugführer beim Manövrieren des Nutzfahrzeuges zu dem noch nicht angehängten Arbeitsgerät entsprechend anzuleiten. Es sind aber auch Steuerungssysteme bei landwirtschaftlichen Nutzfahrzeugen bekannt, bei welchen Funktionen des Nutzfahrzeuges extern über eine Fernbedienung ausgeführt werden können, so dass beispielsweise das Manövrieren des Nutzfahrzeuges oder auch eine Steuerung des jeweiligen Dreipunkt-Krafthebers extern und ohne Hinzuziehen einer Hilfsperson durch den dann nicht im Nutzfahrzeug befindlichen Fahrzeugführer möglich ist. Hierbei kann dann zudem eine Steuerung des jeweiligen Dreipunkt-Krafthebers mit einem ausreichenden Abstand zum Nutzfahrzeug vorgenommen werden, so dass im Vergleich zu einer Bedienung über die ansonsten im Bereich des Dreipunkt-Krafthebers befindlichen Bedienelementen keine Verletzungsgefahr beim Betätigen desselbigen besteht.

Aus der EP 1 004 230 B1 geht ein Verfahren zum externen Steuern eines landwirtschaftlichen Nutzfahrzeuges über eine Fernbedienung hervor. Dabei kommuniziert die Fernbedienung mit einer Bordsteuerung des Nutzfahrzeuges insbesondere kabellos und kann über verschiedene Steuerungsfunktionen anleitend auf die Bordsteuerung einwirken, so dass fahrzeugseitig je zugehörige Funktionen des Nutzfahrzeuges ausführbar sind.

Aus der US 6 285 925 ist zudem ein verfahren bekannt geworden, bei welchem der Abstand einer extern zur Maschine betriebenen Fernbedienung überwacht wird und eine Aktivierung und Deaktivierung von Maschinenfunktionen in Abhängigkeit von einem Mindestabstand zugelassen wird. Ein derartiges System hat den Nachteil, dass stets nur ein Mindestabstand zur Maschine per se und nicht ein Mindestabstand zu einem zu aktivierenden Funktionselement der Maschine berücksichtigt wird.

Ausgehend vom vorstehend beschriebenen Stand der Technik ist es nun die Aufgabe der vorliegenden Erfindung, ein Verfahren zum externen Steuern eines landwirtschaftlichen Nutzfahrzeuges über eine Fernbedienung zu schaffen, das eine erhöhte Sicherheit für eine Bedienperson gewährleistet.

Diese Aufgabe wird aus verfahrenstechnischer Sicht ausgehend vom Oberbegriff des Anspruchs 1 in Verbindung mit dessen kennzeichnenden Merkmalen gelöst. Die hierauf rückbezogenen, abhängigen Ansprüche geben vorteilhafte Weiterbildungen der Erfindung wieder.

Gemäß der Erfindung wird bei einem Verfahren zum externen Steuern eines landwirtschaftlichen Nutzfahrzeuges über eine Fernbedienung eine relative Position der Fernbedienung zum Nutzfahrzeug erfasst. Im Sinne der Erfindung können dabei über die Fernbedienung insbesondere eine Steuerung von Fahrfunktionen des Nutzfahrzeuges, eine Steuerung eines front- und/oder eines heckseitigen Dreipunkt-Krafthebers oder auch sonstiger Funktionen bewerkstelligt werden. So kann zur Positionierung von Nutzfahrzeug und Arbeitsgerät zueinander über die Fernbedienung bevorzugt auf eine Lenkung, eine Bremsanlage, einen Fahrregler, etc. des Nutzfahrzeuges zugegriffen und damit ein Manövrieren des Nutzfahrzeuges von außen vorgenommen werden. Ebenso kann ein Anheben und Absenken des jeweiligen Dreipunkt-Krafthebers über die Fernbedienung gesteuert werden.

Bei dem landwirtschaftlichen Nutzfahrzeug handelt es sich bevorzugt um einen Traktor, welcher an einem frontseitigen und/oder heckseitigen Dreipunkt-Kraftheber entsprechende Arbeitsgeräte aufnehmen kann. Prinzipiell kann es sich aber auch um ein anderweitig ausgeführtes landwirtschaftliches Nutzfahrzeug, wie beispielsweise eine selbstfahrende Erntemaschine, handeln.

Die Erfindung umfasst die technische Lehre, dass Steuerungsfunktionen der Fernbedienung im Einzelnen in Abhängigkeit von der erfassten Position aktiviert oder deaktiviert werden. Mit anderen Worten werden also individuelle Steuerungsfunktionen der Fernbedienung positionsabhängig automatisiert zugelassen - oder eben nicht zugelassen. Eine derartige Gestaltung eines Verfahrens zum externen Steuern eines Nutzfahrzeuges über eine Fernbedienung hat dabei den Vorteil, dass somit nur Steuerungsfunktionen der Fernbedienung zugelassen werden, welche bei der jeweils aktuellen Position unter bestimmten Gesichtspunkten problemlos durchgeführt werden können. In der Folge lassen sich die Sicherheit bei der externen Steuerung, sowie der Bedienungskomfort wesentlich steigern.

Bei einer Fernbedienung im Sinne der Erfindung kann es sich um grundsätzlich jedwede Einrichtung handeln, mit der sich das Nutzfahrzeug in irgendeiner Weise extern steuern lässt. Bevorzugt erfolgt die dazu notwendige Kommunikation drahtlos, beispielsweise über Funk. Es ist denkbar, dass es sich bei der Fernbedienung um eine Einrichtung handelt, die ausschließlich diesem Zweck dient. Auf vorteilhafte Weise kann die Fernbedienung in eine mobile Kommunikationseinrichtung integriert sein, wie beispielsweise in ein Mobiltelefon, ein Smartphone, einen Tablet-PC, einen Laptop oder einen sonstigen mobilen Rechner. Zur Fernbedienung des Nutzfahrzeugs könnte ein Anwendungsprogramm auf der Kommunikationseinrichtung ausführbar sein, das beispielsweise eine Bedienoberfläche erzeugt, über welche einer Bedienperson die entsprechenden Steuerungsfunktionen verfügbar gemacht werden.

Erfindungsgemäß wird die jeweilige Steuerungsfunktion nur dann aktiviert, wenn sich die Fernbedienung außerhalb eines Wirkungsbereichs einer der jeweiligen Steuerungsfunktion zugeordneten Funktion des Nutzfahrzeuges befindet. Hierdurch wird sichergestellt, dass die die Fernbedienung tragende Person weit genug entfernt vom Nutzfahrzeug beim Ausführen der Funktion ist. In der Folge kann die Sicherheit bei der externen Steuerung deutlich gesteigert werden, indem beispielsweise ein Frontlader eines Traktors nur über die Fernbedienung gesteuert werden kann, wenn sich die bedienende Person nicht in der Nähe des Arbeitsbereichs des Frontladers befindet.

Alternativ oder auch ergänzend dazu wird die jeweilige Steuerungsfunktion der Fernbedienung nur dann aktiviert, wenn sich die Fernbedienung in einer Position zum Nutzfahrzeug befindet, in welcher eine Komponente des Nutzfahrzeuges, welche eine der jeweiligen Steuerungsfunktion zugeordnete Funktion ausführt, durch eine die Fernbedienung tragende Bedienperson einsehbar ist. In diesem Fall wird also die jeweilige Steuerungsfunktion nur dann ermöglicht, wenn die Bedienperson sich in dem relevanten Bereich aufhält, um die die Funktion ausführenden Komponente bei der Ausführung auch überwachen zu können. Hierdurch können zudem Fehlbedienungen vermieden werden, wenn beispielsweise eine Steuerung eines heckseitigen Dreipunkt-Krafthebers gewünscht ist, aus Versehen aber Bedienelemente für die Steuerungsfunktion eines frontseitigen Dreipunkt-Krafthebers betätigt werden.

Erfindungsgemäß wird eine Richtung der Position der Fernbedienung zum Nutzfahrzeug erfasst. Bevorzugt wird die Richtung einem von mehreren Sektoren zugeordnet, in welche ein Umfeld des Nutzfahrzeuges eingeteilt ist. Hierdurch kann auf einfache Art und Weise detektiert werden, ob sich die die Fernbedienung tragende Bedienperson in einem Gefahrenbereich befindet und/oder den jeweiligen Arbeitsbereich überhaupt einsehen kann. Je nach konkreter Ausgestaltung des Nutzfahrzeuges kann dabei eine Unterteilung in Sektoren im heckseitigen Bereich ausreichend sein, wobei aber bevorzugt die komplette Umgebung des Nutzfahrzeuges in Sektoren unterteilt und die Richtung der Position über alle diese Sektoren erfasst wird.

Gemäß einer weiteren Ausgestaltung der Erfindung, die alternativ, bevorzugt aber ergänzend zu der vorgenannten Variante zur Anwendung kommt, wird ein Abstand der Fernbedienung zum Nutzfahrzeug erfasst. Hierdurch kann erkannt werden, ob sich die Bedienperson zu dicht an dem Nutzfahrzeug und damit im Arbeitsbereich der jeweils zu steuernden Funktion des Nutzfahrzeuges befindet. Insbesondere wird dabei eine Unterteilung in Abstandsbereiche vorgenommen, welchen der Abstand der Fernbedienung jeweils zugeordnet wird. Besonders bevorzugt wird dabei eine Zuordnung zu den Bereichen < 1 Meter, zwischen 1 Meter und 1,7 Metern, sowie über 1,7 Metern bis 5 oder 7 Meter vorgenommen.

In Weiterbildung der Erfindung wird zwischen der Fernbedienung und einer Bordsteuerung des Nutzfahrzeuges eine kabellose Datenverbindung hergestellt. Zu diesem Zweck ist eine Bordsteuerung des Nutzfahrzeuges bevorzugt mit mindestens einer Antenne ausgestattet, welche mit einer Antenne der Fernbedienung in Funkverbindung gebracht werden kann. Zudem wird die Position der Fernbedienung bevorzugt durch Trilateration ermittelt, wodurch eine Erfassung der Position über zwei nutzfahrzeugseitige Antennen und eine fernbedienungsseitige Antenne mit niedrigem Aufwand möglich ist. Im Sinne der Erfindung ist es jedoch ebenso gut denkbar, die Position der Fernbedienung anderweitig zu erfassen und eine kabellose Datenverbindung anders als über eine Funkverbindung zu realisieren. Zudem kann die Fernbedienung prinzipiell auch über ein Kabel mit der Bordsteuerung des Nutzfahrzeuges verbunden sein.

Eine vorteilhafte Ausgestaltung der Erfindung, die nachfolgend erläutert wird, ist in den Zeichnungen dargestellt. Es zeigt:
- Fig. 1: eine schematische Ansicht eines landwirtschaftlichen Nutzfahrzeuges bei einer externen Steuerung über eine Fernbedienung; und
- Fig. 2: ein Ablaufdiagramm eines erfindungsgemäßen Verfahrens zum externen Steuern des Nutzfahrzeuges über die Fernbedienung.

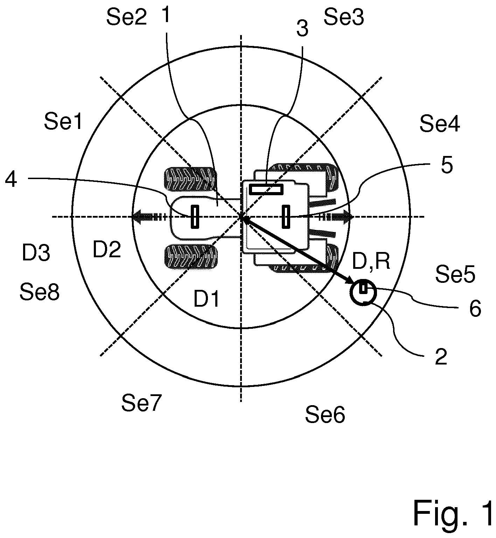

Aus Fig. 1 geht eine schematische Ansicht eines landwirtschaftlichen Nutzfahrzeuges 1 hervor, bei welchem es sich insbesondere um einen Traktor handelt. Neben einer herkömmlichen Steuerung des Nutzfahrzeuges 1 über einen dann in einer Kabine des Nutzfahrzeuges sitzenden Fahrzeugführer kann eine Bedienperson das Nutzfahrzeug 1 zudem extern über eine Fernbedienung 2 steuern, welche dabei mit einer Bordsteuerung 3 des Nutzfahrzeuges 1 über eine Funkverbindung kabellos kommuniziert.

Über die Fernbedienung 2 können dabei verschiedene Funktionen des Nutzfahrzeuges 1 gesteuert werden, wie beispielsweise die Betätigungen von - vorliegend nicht weiter dargestellten - heck- und frontseitigen Dreipunkt-Krafthebern, eines Frontladers, Fahrfunktionen des Nutzfahrzeuges 1, um das Nutzfahrzeug 1 im letztgenannten Fall zum Beispiel in eine zum Ankoppeln von Arbeitsgeräten jeweils geeignete Position manövrieren zu können. Hinsichtlich der Fahrfunktionen kann die Fernbedienung 2 dazu über die Bordsteuerung 3 auf einen Fahrregler, eine Bremsanlage, eine Lenkung, etc. des Nutzfahrzeuges 1 einwirken. Die einzelnen Steuerungsfunktionen der Fernbedienung 2 werden dabei jeweils im Einzelnen in Abhängigkeit einer Position der Fernbedienung 2 zum Nutzfahrzeug 1 aktiviert oder deaktiviert.

Die Fernbedienung 2 als separate Einrichtung ausgeführt sein, die ausschließlich diesem Zweck dient. Alternativ kann die Fernbedienung 2 Teil einer mobilen Kommunikationseinrichtung sein, wie beispielsweise eines Mobiltelefons, eines Smartphones, eines Tablet-PCs, eines Laptops oder eines sonstigen mobilen Rechners. Zur Fernbedienung des Nutzfahrzeugs 1 könnte ein Anwendungsprogramm auf der Kommunikationseinrichtung ausführbar sein, das beispielsweise eine Bedienoberfläche erzeugt, über welche einer Bedienperson die entsprechenden Steuerungsfunktionen verfügbar gemacht werden.

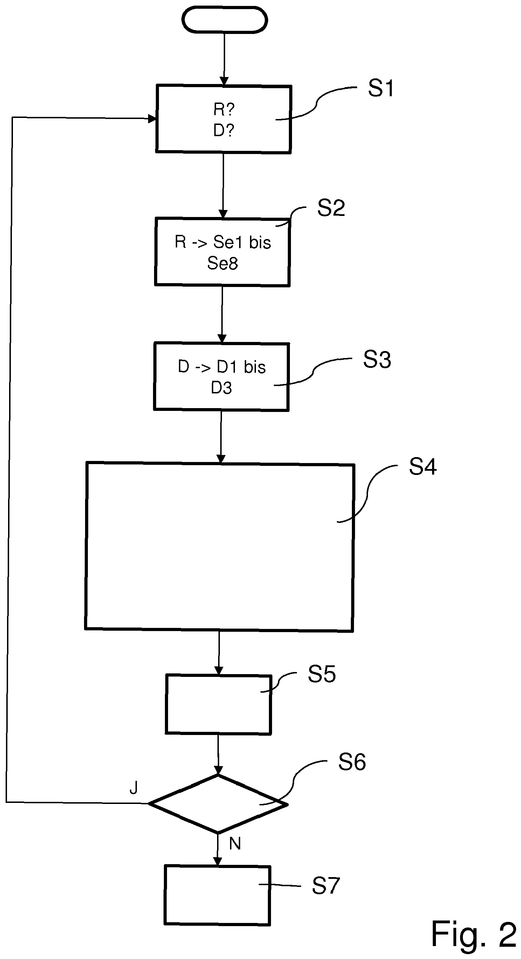

Aus Fig. 2 geht ein Ablaufdiagramm eines Verfahrens hervor, welches nachfolgend in Verbindung mit der Fig. 1 erläutert wird und entsprechend welchem das externe Steuern des Nutzfahrzeuges 1 über die Fernbedienung 2 realisiert wird. Dabei wird dieses Verfahren seitens der Bordsteuerung 3 dann gestartet, wenn die Fernbedienung 2 eingeschaltet wurde, beispielsweise durch Entnehmen aus einer seitens des Nutzfahrzeuges 1 hierfür vorgesehenen Station, und sich das Nutzfahrzeug 1 im Betrieb befindet.

In einem ersten Schritt S1 wird durch die Bordsteuerung 3 die relative Position der Fernbedienung 2 zum Nutzfahrzeug 1 und damit auch die der diese tragenden Bedienperson abgefragt. Hierzu wird über zwei in Fig. 1 zu sehende, nutzfahrzeugseitige Antennen 4 und 5, sowie eine fernbedienungsseitige Antenne 6 eine Positionsermittlung mittels Trilateration durchgeführt. Im Rahmen der Positionsermittlung wird dabei zum einen eine Richtung R der Position der Fernbedienung zum Nutzfahrzeug 1, sowie ein Abstand D der Fernbedienung 2 zum Nutzfahrzeug 1 ermittelt.

In einem auf Schritt S1 folgenden Schritt S2 wird die ermittelte Richtung R einem von insgesamt acht Sektoren Se1 bis Se8 zugeordnet, in welche, wie in Fig. 1 zu sehen ist, ein Umfeld des Nutzfahrzeuges 1 eingeteilt worden ist. In dem in Fig. 1 dargestellten Fall würde die Position der Fernbedienung 2 dabei dem Sektor Se5 zugeordnet, welcher sich in einem heckseitigen Bereich des Nutzfahrzeuges 1 befindet. Ferner wird der Abstand D in einem Schritt S3, welcher dabei im Anschluss an Schritt S2 oder auch parallel dazu stattfinden kann, einem von mehreren Distanzbereichen D1 bis D3 zugeordnet, wobei D1 dabei einen Abstand < 1 Meter zum Nutzfahrzeug 1, D2 einen Abstand zwischen 1 Meter und 1,7 Meter zum Nutzfahrzeug 1, sowie D3 einen Abstand über 1,7 Meter bis 5 bzw. 7 Meter beschreibt. Im Falle des in Fig. 1 zu sehenden Zustands würde die Position der Fernbedienung 2 dementsprechend dem Abstandsbereich D2 zugeordnet werden.

In einem weiteren Schritt S4 werden dann die verschiedenen über die Fernbedienung 2 darstellbaren Steuerungsfunktionen in Abhängigkeit der Zuordnung zu einem der Sektoren Se1 bis Se8 und der Zuweisung zu einem der Abstandsbereiche D1 bis D3 aktiviert oder deaktiviert. So werden die Steuerungsfunktionen im Einzelnen zum einen nur dann aktiviert, wenn sich die Fernbedienung 2 und damit auch die diese tragende Bedienperson außerhalb eines jeweiligen Wirkungsbereichs der der jeweiligen Steuerungsfunktion zugeordneten Funktion des Nutzfahrzeuges 1 befindet. Zudem erfolgt auch nur dann eine Aktivierung, wenn die Bedienperson von ihrer derzeitigen Position aus den Bereich der die Funktion ausführenden Komponente des Nutzfahrzeuges 1 einsehen kann.

So wird beispielsweise im Falle der Position der Fernbedienung in Fig. 1 aufgrund der Richtung der Position und des Abstandes D eine Steuerung eines heckseitigen Dreipunkt-Krafthebers über die Fernbedienung 2 erlaubt, da sich die Bedienperson mit der Fernbedienung 2 in diesem Bereich befindet und von daher Bewegungen des heckseitigen Dreipunkt-Krafthebers problemlos überwachen kann. Hingegen wird ein Betreiben eines frontseitigen Dreipunkt-Krafthebers über die Fernbedienung 2 gesperrt, da die Bedienperson aufgrund ihrer derzeitigen Position dessen Arbeitsbereich nur schlecht einsehen kann.

Ferner kann im Falle der in Fig. 1 eingenommenen Position der Bedienperson eine Steuerung von Fahrfunktionen des Nutzfahrzeuges 1 deaktiviert sein, weil sich die Bedienperson hierzu zu dicht am Nutzfahrzeug 1 befindet und insofern Verletzungsgefahr bei bestimmten Fahrmanövern besteht. Eine Aktivierung von die Fahrfunktion des Nutzfahrzeuges 1 betreffenden Steuerungsfunktionen kann dann beispielsweise erst aktiviert werden, wenn sich die Fernbedienung 2 in den Abstandsbereich D3 bewegt und somit auf einen größeren Abstand der Bedienperson zum Nutzfahrzeug 1 zu schließen ist.

Im Anschluss an Schritt S4 werden dann die zulässigen Steuerungsfunktionen in einem Schritt S5 aktiviert, während unzulässige Funktionen deaktiviert bleiben. Dabei erfolgt diese Aktivierung durch Zugriff der Bordsteuerung 3 auf die Fernbedienung 2, wobei es hierbei denkbar ist, die Aktivierung der entsprechenden Funktionen der Bedienperson an der Fernbedienung 2 visuell aufzuzeigen. Hierdurch kann die Bedienperson darauf schließen, dass sie sich zur Ausführung bestimmter Steuerungsfunktionen noch in eine andere Position begeben muss.

Im Anschluss an Schritt S5 wird dann in einem Schritt S6 abgefragt, ob die Fernbedienung 2 nach wie vor aktiviert ist, wobei in einem zu bejahenden Fall zu Schritt S1 zurückgesprungen und im Folgenden wiederum die Position der Fernbedienung 2 erfasst, sowie eine Aktivierung bzw. Deaktivierung der einzelnen Steuerungsfunktionen vorgenommen wird. Wurde die Fernbedienung 2 hingegen deaktiviert, so wird zu einem Schritt S7 übergegangen und das Verfahren beendet.

Mittels eines erfindungsgemäßen Verfahrens zum externen Steuern eines landwirtschaftlichen Nutzfahrzeuges kann eine externe Steuerung über eine Fernbedienung optimiert werden.

### Bezugszeichenliste

- 1: Nutzfahrzeug
- 2: Fernbedienung
- 3: Bordsteuerung
- 4: Antenne
- 5: Antenne
- 6: Antenne

- R: Richtung
- D: Abstand
- Se1 bis Se8: Sektoren
- D1 bis D3: Distanzbereiche

## Patentansprüche

1. Verfahren zum externen Steuern eines landwirtschaftlichen Nutzfahrzeuges (1) über eine Fernbedienung (2), wobei eine relative Position der Fernbedienung (2) zum Nutzfahrzeug (1) erfasst wird (S1),
**dadurch gekennzeichnet, dass** Steuerungsfunktionen der Fernbedienung (2) im Einzelnen in Abhängigkeit von der erfassten Position, wobei die Erfassung der Position die Erfassung der Richtung (R) der Position der Fernbedienung (2) zum Nutzfahrzeug (1) umfasst, aktiviert oder deaktiviert werden (S5), wobei die jeweilige Steuerungsfunktion nur dann aktiviert wird, wenn sich die Fernbedienung (2) außerhalb eines Wirkungsbereichs einer der jeweiligen Steuerungsfunktion zugeordneten Funktion des Nutzfahrzeuges (1) befindet.

2. Verfahren nach Anspruch 1, **dadurch gekennzeichnet, dass** die jeweilige Steuerungsfunktion der Fernbedienung (2) nur dann aktiviert wird, wenn sich die Fernbedienung (2) in einer Position zum Nutzfahrzeug (1) befindet, in welcher eine Komponente des Nutzfahrzeuges (1), welche eine der jeweiligen Steuerungsfunktion zugeordneten Funktion ausführt, durch eine die Fernbedienung (2) tragende Bedienperson einsehbar ist.

3. Verfahren nach Anspruch 1, **dadurch gekennzeichnet, dass** die Richtung (R) einem von mehreren Sektoren (Se1 bis Se8) zugeordnet wird (S2), in welche ein Umfeld des Nutzfahrzeuges (1) eingeteilt ist.

4. Verfahren nach Anspruch 1, **dadurch gekennzeichnet, dass** ein Abstand (D) der Fernbedienung (2) zum Nutzfahrzeug (1) erfasst wird.

5. Verfahren nach Anspruch 1, **dadurch gekennzeichnet, dass** zwischen der Fernbedienung (2) und einer Bordsteuerung (3) des Nutzfahrzeuges (1) eine kabellose Datenverbindung hergestellt wird.

6. Verfahren nach Anspruch 1, **dadurch gekennzeichnet, dass** die Position der Fernbedienung (2) durch Trilateration ermittelt wird.

## Claims

1. A method for the external control of an agricultural utility vehicle (1) by means of a remote control (2), wherein a relative position of the remote control (2) with respect to the utility vehicle (1) is detected (S1),
**characterized in that** control functions of the remote control (2) are individually activated or deactivated as a function of the detected position, wherein the detection of the position comprises the detection of the direction (R) of the position of the remote control (2) with respect to the utility vehicle (1) (S5), wherein the respective control function is only activated when the remote control (2) is located outside an action range of one of the functions of the utility vehicle (1) assigned to the respective control function.

2. The method according to claim 1, **characterized in that** the respective control function of the remote control (2) is only activated when the remote control (2) is located in a position with respect to the utility vehicle (1) in which a component of the utility vehicle (1) which carries out one of the functions assigned to the respective control function can be seen by an operator carrying the remote control (2).

3. The method according to claim 1, **characterized in that** the direction (R) is assigned (S2) to one of a plurality of sectors (Se1 to Se8) into which an environment of the utility vehicle (1) has been divided.

4. The method according to claim 1, **characterized in that** a distance (D) of the remote control (2) with respect to the utility vehicle (1) is detected.

5. The method according to claim 1, **characterized in that** a wireless data connection is produced between the remote control (2) and an on-board control (3) of the utility vehicle (1).

6. The method according to claim 1, **characterized in that** the position of the remote control (2) is determined by means of trilateration.

## Revendications

1. Procédé de commande externe d'un véhicule utilitaire agricole (1) par l'intermédiaire d'une télécommande (2), une position relative de la télécommande (2) par rapport au véhicule utilitaire (1) étant détectée (S1),
**caractérisé en ce que** des fonctions de commande de la télécommande (2) sont activées ou désactivées (S5) individuellement en fonction de la position détectée, la détection de la position incluant la détection de la direction (R) de la position de la télécommande (2) par rapport au véhicule utilitaire (1), la fonction de commande respective n'étant activée que si la télécommande (2) se trouve à l'extérieur d'une zone d'action d'une fonction du véhicule utilitaire (1) associée à la fonction de commande respective.

2. Procédé selon la revendication 1, **caractérisé en ce que** la fonction de commande respective (2) n'est activée que si la télécommande (2) se trouve, par rapport au véhicule utilitaire (1), dans une position où un composant du véhicule utilitaire (1), qui exécute une fonction associée à la fonction de commande respective, est visible par un opérateur portant la télécommande (2).

3. Procédé selon la revendication 1, **caractérisé en ce que** la direction (R) est associée (S2) à un de plusieurs secteurs (Se1 à Se8) en lesquels est divisé un environnement du véhicule utilitaire (1) .

4. Procédé selon la revendication 1, **caractérisé en ce qu'**une distance (D) de la télécommande (2) au véhicule utilitaire (1) est détectée.

5. Procédé selon la revendication 1, **caractérisé en ce qu'**entre la télécommande (2) et une commande de bord (3) du véhicule utilitaire (1) est établie une liaison de données sans fil.

6. Procédé selon la revendication 1, **caractérisé en ce que** la position de la télécommande (2) est déterminée par trilatération.
